Europäisches Patentamt

European Patent Office

Office européen des brevets

(11) Numéro de publication : **0 442 799 A1**

# (12) DEMANDE DE BREVET EUROPEEN

(21) Numéro de dépôt : **91400344.7**

(51) Int. Cl.⁵ : **H01G 4/20, H01G 4/22**

(22) Date de dépôt : **12.02.91**

(30) Priorité : **12.02.90 FR 9001604**

(43) Date de publication de la demande :
**21.08.91 Bulletin 91/34**

(84) Etats contractants désignés :
**BE CH DE ES FR GB IT LI NL SE**

(71) Demandeur : **BOLLORE TECHNOLOGIES**
**Odet**
**F-29000 Quimper (FR)**

(72) Inventeur : **Mouries, Gérard**
**5 square de Lézébel**
**F-29500 Ergue-Gaberic (FR)**
Inventeur : **Tamic, Lucien**
**5 Allée de Coat-Chapel**
**F-29500 Ergue-Gaberic (FR)**

(74) Mandataire : **Martin, Jean-Jacques et al**
**Cabinet REGIMBEAU 26, Avenue Kléber**
**F-75116 Paris (FR)**

(54) **Condensateur électrique.**

(57) La présente invention concerne un condensateur électrique imprégné formé par empilement ou enroulement de différents films métallisés caractérisé par le fait qu'il comprend une alternance : de feuilles plastiques métallisées de type très cristallin (100) et de feuilles plastiques non métallisées de type plus amorphe (130).

# FIG. 2

# CONDENSATEUR ELECTRIQUE

La présente invention concerne le domaine des condensateurs électriques.

Elle concerne plus précisément les condensateurs électriques de puissance.

Les condensateurs électriques destinés à des applications en tension inférieure à 600V en courant alternatif et inférieure à 1000V en courant continu sont le plus souvent réalisés par enroulement ou empilement de films polypropylène métallisés secs autocicatrisants.

Pour les tensions supérieures, on utilise des technologies imprégnées d'huile diélectrique ou d'un semi-solide (par exemple cire). En courant continu le papier constitue le plus souvent la meilleure solution. En courant alternatif on utilise généralement la technologie dite "tout film".

Cette technologique dite "tout film" emploie du film polypropylène dont la surface est rugueuse, des armatures en feuilles d'aluminium enroulées avec les films et une imprégnation par une huile aromatique. La rugosité du film et le mode d'embobinage du condensateur donnent un foisonnement qui permet à l'huile de pénétrer totalement entre les films. L'imprégnation est complète et optimum lorsqu'après un traitement thermique l'huile a fait gonfler le film et dissout une partie de celui-ci. Le gonflement et le mélange huile/film dissout permettent de minimiser les couches d'huile entre les armatures, ce qui améliore la rigidité du complexe diélectrique. L'huile possède en effet une rigidité très inférieure à celle du film initial et du film gonflé. La technologie tout film est devenue performante. Le champ nominal d'utilisation atteint 65V/$\mu$m en courant alternatif.

Pour aller plus loin, les spécialistes ont cependant envisagé l'utilisation du polypropylène rugueux métallisé imprégné et autocicatrisant.

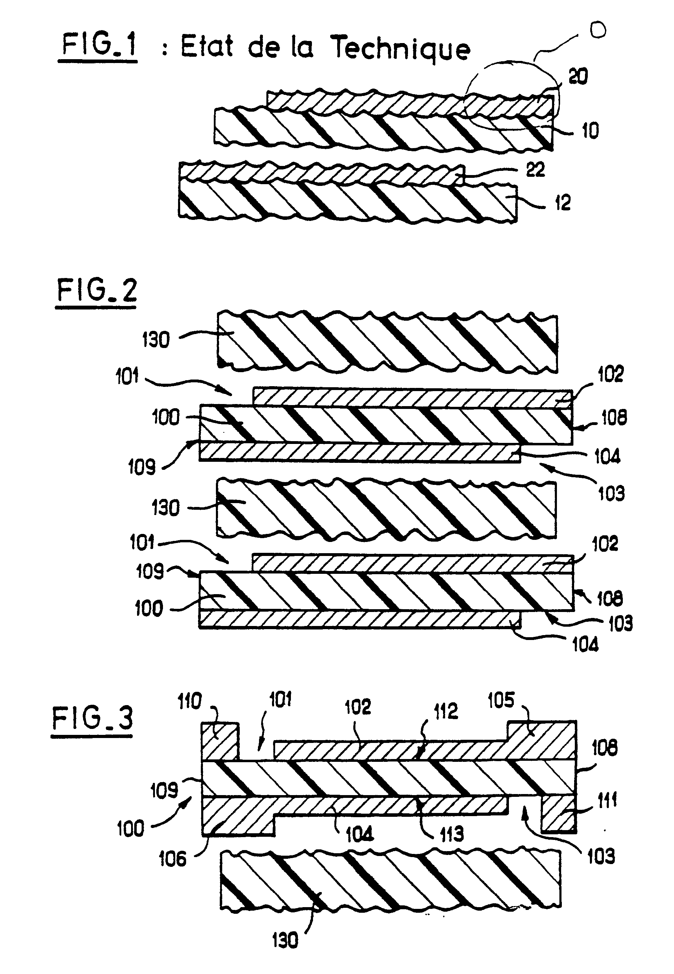

On a représenté schématiquement, en coupe transversale, sur la figure 1, deux films polypropylène rugueux 10, 12, métallisés en 20, 22, conformes à cette proposition de l'art antérieur.

Cependant, en l'état actuel de la technique, les spécialistes butent sur le problème de la dissolution partielle du film dans l'huile. Cette dissolution partielle en effet détruit ou affaiblit l'accrochage de la métallisation sur le film. Les condensateurs se détruisent après quelques dizaines ou centaines d'heures de fonctionnement.

Parallèlement, dans le domaine du courant continu, le papier ne peut plus guère évoluer et les progrès (réduction, coût, volume, poids) passent également par l'emploi du polypropylène métallisé imprégnable.

Il existe il est vrai des huiles qui réagissent peu avec le polypropylène (par exemple des huiles silicones, ou certaines huiles végétales). Mais le comportement diélectrique de ces huiles est médiocre, vu les champs électriques élevés nécessaires.

Les spécialistes se trouvent donc devant le dilemme suivant :

– soit ils utilisent une huile qui réagit avec le polypropylène pour avoir de bonnes caractéristiques diélectriques, mais les métallisations se détruisent fréquemment ;

– soit ils utilisent une huile qui réagit peu avec le polypropylène ; les métallisations sont alors préservées mais on n'obtient pas les qualités diélectriques souhaitées pour réduire les dimensions des condensateurs.

Le but principal de la présente invention est d'éliminer les inconvénients de la technique antérieure en proposant une nouvelle structure de condensateurs électriques de puissance.

Ce but est atteint selon la présente invention grâce à un condensateur électrique imprégné formé par empilement ou enroulement de différents films métallisés, caractérisé par le fait qu'il comprend une alternance de feuilles plastiques métallisées de type très cristallin et de feuilles plastiques non métallisées de type plus amorphe.

Selon une première caractéristique avantageuse de l'invention, les feuilles plastiques utilisées sont formées de polypropylène.

Selon une première variante de la présente invention, les deux feuilles plastiques respectivement de type très cristallin et de type plus amorphe, sont formées de films séparés.

Dans le cadre de cette première variante, la feuille plastique métallisée de type très cristallin est de préférence un film métallisé bi-face. La feuille plastique non métallisée de type plus amorphe forme alors un film intercalaire.

Selon une seconde variante de la présente invention, les deux feuilles plastiques respectivement de type très cristallin et de type plus amorphe constituent deux couches superposées d'un film unique.

D'autres caractéristiques, buts et avantages de la présente invention apparaîtront à la lecture de la description détaillée qui va suivre, et en regard des dessins annexés donnés à titre d'exemples non limitatifs et sur lesquels :

– la figure 1 représente une vue schématique en coupe transversale d'un condensateur classique conforme à l'état de la technique,

– la figure 2 représente selon une vue schématique en coupe transversale un premier mode de réalisation d'un condensateur électrique conforme à l'invention,

– la figure 3 représente selon une vue schématique en coupe transversale un second mode de réalisation d'un condensateur électrique conforme à l'invention, et

– la figure 4 représente selon une vue schématique en coupe transversale un troisième mode de réalisation d'un condensateur électrique conforme à la présente invention.

On aperçoit sur la figure 2 un mode de réalisation préférentiel du condensateur conforme à la présente invention comprenant un empilement ou enroulement en alternance de films plastiques 100 métallisés de type très cristallin et de films plastiques intercalaires 130 non métallisés et de type plus amorphe.

Dans le cas du mode de réalisation représenté sur la figure 2, les deux feuilles plastiques respectivement de type très cristallin et de type plus amorphe sont donc formées de films séparés.

Plus précisément encore, selon le mode de réalisation préférentiel représenté sur la figure 2, le film plastique métallisé 100 de type très cristallin est métallisé bi-face, comme représenté schématiquement en 102, 104.

Par ailleurs, le film 100 est un film lisse.

En revanche, le film 130 non métallisé et plus amorphe est un film rugueux.

Les revêtements métalliques 102, 104, peuvent être réalisés par toutes techniques classiques connues de l'homme de l'art.

Le cas échéant, les revêtements 102, 104, peuvent être formés par dépôts successifs de différents composants comme enseigné par exemple dans le document EP-A-73555.

Comme cela est connu de l'homme de l'art, chaque revêtement peut être divisé en une pluralité de plages reliées à une piste commune servant à l'amenée de courant, par l'intermédiaire de zones de faible section, qui tiennent lieu de fusible. Dans le cas de défaut sur une plage, la zone de liaison de faible section associée peut s'évaporer pour isoler la plage déficiente. La géométrie de la division des revêtements en différentes plages peut être, par exemple mais non limitativement, conforme aux dispositions décrites et représentées dans les documents FR-A-1051435, FR-A-1058368, FR-A-1087756, FR-A- 2453482, FR-A-2579366, FR-A-2589620, FR-A-2598025, FR-A-2605140, EP-A-32738, US-A-2216558, US-A-2683792, US-A-4433359, US-A-4494168 et DE-A-1464 398.

On notera que comme représenté sur la figure 2 annexée, de préférence, les revêtements 102, 104, ne s'étendent pas sur toute la largeur du substrat 100. Les revêtements sont interrompus à distance de l'un des bords du substrat 100. Il est ainsi prévu une bande longitudinale marginale 101, 103 du substrat 100 dépourvue de revêtement conducteur, sur chacune des faces. Cette bande 101, 103 est généralement dénommée "marge" par les spécialistes.

Par ailleurs, on notera que les marges 101, 103 sont prévues au voisinage des bords respectivement opposés 108, 109 du film substrat 100.

Ces marges 101, 103 ont pour but d'éviter tout risque de liaison électrique directe entre les deux électrodes du condensateur, lorsqu'après enroulement de deux films ou empilement d'une pluralité de feuilles découpées dans les films, des contacts sont établis, par exemple par shoopage, sur les tranches du bobinage ou empilement, entre les deux électrodes du condensateur et les connexions de sortie respectives.

Après enroulement ou empilement de la structure précédemment décrite représentée schématiquement sur la figure 2, on procède à une imprégnation de cette structure avec un liquide de caractère aromatique. Au cours de cette imprégnation, du fait de la différence de cristallinité, le film 130 non métallisé et plus amorphe réagit plus vite avec l'huile que le film métallisé 100. Une fois gonflé et partiellement dissout, le film 130 retient l'huile. Il n'y a alors plus l'espace nécessaire pour du liquide libre qui pourrait dissoudre et gonfler le film 100. Le film 100 ayant peu réagi avec l'huile, ces métallisations 102, 104 ne se détruisent pas.

De plus, les métallisations 102, 104 du film 100 freinent la pénétration de l'huile dans ce dernier et renforcent encore le phénomène de protection décrit ci-dessus.

Le cas échéant, des dépôts complémentaires d'isolant ou de semi-conducteur, par exemple à base de SiO, SiO2 ou composé fluoré ou un traitement de surface approprié, peuvent être prévus sur les métallisations 102, 104, pour améliorer l'imperméabilisation du film 100.

Ces couches d'imperméabilisation peuvent être prévues sur une seule face ou sur les deux faces métallisées du film 100.

Selon une caractéristique très importante de la présente invention, de préférence, les deux films 100 et 130 sont formés de polypropylène.

Grâce à la structure proposée par la présente invention, la contribution des forces électrostatiques résultantes appliquées sur les métallisations 102, 104, est favorable à l'adhérence de celles-ci sur le film 100. En effet, si l'on choisit les épaisseurs des films 100, et 130 de telle sorte que le champ électrique $E2$ dans le film non métallisé 130 soit inférieur au champ électrique $E1$ dans le film métallisé 100 (pour cela l'épaisseur du film 130 est supérieure à celle du film 100), la pression électrostatique des électrodes sur le film 100 est :

$$p = \varepsilon o \, (\varepsilon 1 \, (E1)^2 - \varepsilon 2 \, (E2)^2)$$

où

$\varepsilon o$ représente la permittivité du vide,

$\varepsilon 1$ représente la permittivité relative du film 100,

$\varepsilon 2$ représente la permittivité relative du film 130.

Pour obtenir le même effet (pression électrostatique des électrodes favorable sur le fim métallisé 100), on peut aussi agir sur les perméabilités des films et faire en sorte que $\varepsilon 1 > \varepsilon 2$.

L'essentiel pour avoir une pression électrostatique favorable est d'avoir $\varepsilon$ 1(E1)²>$\varepsilon$ 2(E2)².

Dans les zones de débord, le film 100 peut rester exposé à l'huile libre ce qui peut entraîner un risque de détérioration de la métallisation. Dans ce cas, il est possible de renforcer la métallisation dans cette zone sans remettre en cause les qualités d'autocicatrisation puisque cette partie est hors champ électrique. Pour améliorer la tenue des connexions, on peut utiliser la configuration représentée sur la figure 3 où l'on conserve une métallisation sur les deux faces. Dans ce cas, le shoopage se "soude" sur chaque côté du film 100 et limite le gonflement. On aperçoit ainsi sur la figure 3 un film 100 qui comprend sur une première de ses faces 112, un revêtement métallisé 102 s'étendant à partir d'un premier bord 108, et une bande métallisée 110 adjacente au second bord 109. Le revêtement métallisé 102 et la bande métallisée 110 sont séparés par une bande non métallisée 101 formant marge. De préférence, la zone 105 du revêtement métallisé 102 adjacente au bord 108 et la bande métallisée 110 adjacente au bord 109 sont épaissies.

Par ailleurs, le film substrat 100 est pourvu sur sa seconde face 113 d'un revêtement métallisé 104 s'étendant à partir du bord 109, et d'une bande métallisée séparée 111 adjacente au bord opposé 108. Le revêtement métallisé 104 et la bande métallisée 111 sont séparés par une piste non métallisée 103 formant marge.

Là encore la zone 106 du revêtement métallisé 104 adjacente au bord 109 et la zone métallisée 111 isolée sont de préférence épaissies.

Selon une autre caractéristique avantageuse de la présente invention, l'étape d'imprégnation de la structure proposée peut être réalisée en deux temps.

Dans un premier temps, on réalise l'imprégnation de l'enroulement ou empilement de films avec un liquide aromatique adapté pour réagir fortement avec le film non métallisé amorphe 130 (il peut s'agir par exemple d'un mélange de mono et dibenzyl toluène) puis on vidange le condensateur et dans un second temps on effectue un remplissage avec une huile inerte pour le film métallisé 100 (il peut s'agir par exemple d'huile silicone, ou d'huile végétale telle que de l'huile de colza).

Le cas échéant, l'huile utilisée pour assurer le remplissage du condensateur dans le second temps, c'est-à-dire après vidange, peut être formée d'un mélange d'huile inerte et aromatique.

La technique de double imprégnation ci-dessus décrite permet de bloquer toutes dégradations à très long terme du film métallisé 100.

Selon une autre caractéristique avantageuse de l'invention la différence de cristallinité entre le film plastique métallisé 100 de type très cristallin (isotactique) et le film plastique intercalaire non métallisé 130 de type plus amorphe (atactique) correspond à la différence de solubilité ci-dessous, mesurée dans un liquide aromatique M-DBT, mono et dibenzyl toluène, plus précisément le produit commercialisé par la Société ATOCHEM sous la marque JARYLEC C101 (75% de monobenzyl toluène et 25% de dibenzyl toluène) :

  – Film 100
    . solubilité dans le M-DBT $\leqq$ 1%
    . variation sens machine -1 à -3%
    . variation sens travers $\pm$1 %
  – Film 130
    . solubilité dans le M-DBT 1,0 à 5%
    . variation sens machine -1 à -3%
    . variation sens travers $\pm$1 %

Les variations du film à sec sont mesurées à 100°C selon la norme ASTM D= 1204-78.

On notera que pour les deux films, la configuration métallisée avec schoopage nécessite une bonne stabilité dimensionnelle en sens machine et sens travers.

Comme liquide aromatique, on peut utiliser les produits suivants purs, ou en mélange :

  – M-DBT : Mono et dibenzyl toluène
  – DOP : Dioctylphtalate
  – DINP : Di-isononylphtalate
  – PXE : Phényl xylyl éthane
  – DTE : Ditolyléther
  – Isopropylnaphtalate.

Comme huile inerte, on peut utiliser les huiles suivantes pures ou en mélagne :

  – colza
  – tournesol
  – maïs
  – coton
  – silicone.

La Demanderesse a procédé à des essais sur des lots de condensateurs, certains de configuration classique, les autres de configuration selon l'invention, répondant aux caractéristiques suivantes.

ESSAI A

Lot n°1 : Configuration classique (figure 1).

Les condensateurs de ce premier lot comprenaient un bobinage formé de :
  – un film rugueux sur ses deux faces, d'une épaisseur de 9µm, présentant un taux de solubilité de 2% dans le Jarylec, métallisé sur une face à 6 $\Omega$/U² selon le document EP-A-0073555, et avec un bord renforcé de 3 $\Omega$/U², et
  – un film rugueux sur ses deux faces, d'une épaisseur de 9µm, présentant un taux de solubilité de 2% dans le Jarylec et non métallisé.

Ce bobinage était imprégné de Jarylec C101 formé d'un mélange de mono et dibenzyl toluène.

Lot n°2 : Configuration selon l'invention (figure 3).

Les condensateurs conformes à la présente invention de ce second lot comprenaient un bobinage formé de :

    – un film 100 lisse sur ses deux faces, d'une épaisseur de 8μm, présentant un taux de solubilité de 0,7% dans le Jarylec, et

    – un film 130 rugueux sur ses deux faces, d'une épaisseur de 9μm, présentant un taux de solubilité de 2% dans le Jarylec.

Le fim 100 a été métallisé sur les deux faces conformément au document EP-A-0073555 ($6\ \Omega\ /U^2$ avec un bord renforcé $3\ \Omega/U^2$). Le bobinage ainsi réalisé a été imprégné de Jarylec C101.

Les résultats obtenus sont les suivants : Capacités de 15μF, 20 mesures

    – vieillissement à 75°C, 700 V en courant alternatif, 50Hz, 1000h :

        Lot n° 1 : $\Delta$ C/C $\simeq$ - 5%
        Lot n° 2 : $\Delta$ C/C $\simeq$ - 0,5%.

    – pertes diélectriques (tg δ)

Lot n° 1 :

. mesures à 50Hz.500V

    – avant vieillissement : $2\times10^{-4}$

    – après vieillissement : $10\times10^{-4}$

. mesures à 1000Hz.1V

    – avant vieillissement : $20\times10^{-4}$

    – après vieillissement : $150\times10$-4

Lot n° 2 :

. mesures à 50Hz.500V

    – avant vieillissement : $2\times10^{-4}$

    – après vieillissement : $2\times10^{-4}$

. mesures à 1000Hz.1V

    – avant vieillissement : $20\times10^{-4}$

    – après vieillissement : $25\times 10$-4

L'Expertise des enroulements montre que dans le lot n° 1, il y a dégradation de la couche métallisée, d'où une augmentation de la tg δ et de perte de capacité ($\Delta$ C/C). Cette dégradation est particulièrement importante sur la partie de l'électrode en regard de la marge (zone référencée O sur la figure 1).

En revanche, les condensateurs réalisés selon l'invention ne présentent pas cette dégradation.

ESSAI B

Lot n° 3 : identique à Lot n°1 de l'essai A, mais dont les électrodes sont découpées en mosaïques de forme carrée au pas de 7,5mm avec des fusibles de 120μm selon la demande de brevet FR 89 11713 du 7 Septembre 1989.

Lot n° 4 : film identique à Lot n°2 dont les électrodes sont formées de mosaïques de forme carrée au pas de 7,5mm avec des fusibles de 120μm, selon la demande de brevet 89 11713 du 7 Septembre 1989.

Résultats :

Eléments de 15μF - Moyenne de 15 mesures.

    – vieillissement à 75°C - 770 V C Alt, 50Hz - 1000H

Lot n° 3

$\Delta$ C/C $\simeq$ -9,7 %

    Lot n° 4

$\Delta$ C/C $\simeq$ 1,3%

    – pertes diélectriques (tg δ)

    Lot n° 3

Mesures à 50Hz 500V

    – avant vieillissement : $2\times10^{-4}$

    – après vieillissement : $13\times10^{-4}$

Mesures à 1000Hz 1V

    – avant vieillissement : $30\times10^{-4}$

    – après vieillissement : $200\times10^{-4}$

    Lot n° 4

Mesures à 50Hz - 500VCA

    – avant vieillissement : $2\times10^{-4}$

    – après vieillissement : $2\times10^{-4}$

Mesures à 1000Hz - 1 VCA

    – avant vieillissement : $30\times10^{-4}$

    – après vieillissement : $35\times10^{-4}$.

Bien entendu la présente invention n'est pas limitée aux modes de réalisation qui viennent d'être décrits, mais s'étend à toutes variantes conformes à son esprit.

On notera par exemple que le cas échéant, le film métallisé 100 peut être légèrement rugueux sur ses deux faces. Une légère rugosité permet d'améliorer l'adhérence des revêtements métalliques 102, 104.

Par ailleurs, le film amorphe non métallisé 130 peut être lisse.

La configuration de condensateur proposée dans le cadre de la présente invention offre entre autres les avantages suivants.

La structure de condensateur proposé par la présente invention accepte les huiles de type aromatiques, ce qui n'est généralement pas le cas des structures classiques. Par ailleurs, la structure conforme à la présente invention tolère une réaction avec le liquide, et conduit par conséquent à un bon diélectrique.

L'étanchéification à l'huile par un dépôt isolant (au traitement de surface), telle que de la silice, lorsqu'elle est utilisée, est limitée aux deux faces du film cristallin 100 et n'a pas à être étendue au film amorphe 130.

Enfin, on citera l'action bénéfique des forces électrostatiques dans le cadre de l'invention. A titre d'exemples, si l'épaisseur du film métallisé cristallin 100 est de 10μm tandis que l'épaisseur du film non métallisé amorphe 130 est de 11μm, une tension de 1500V conduit à une force de maintien du métal sur le film 100 de 600g par cm². En revanche, selon l'état de la technique représenté sur la figure 1, une différence de 1% entre les épaisseurs conduit à une force d'arrachement du métal de 60g par cm² pour 12μm sous 1500V.

Dans la description qui précède, on a cité le polypropylène pour réaliser les deux filsm 100 et 130.

Plus précisément selon la présente invention, les deux films 100 et 130 peuvent être réalisés en polypropylène ou copolymère, ou en mélange de polypropylène homopolymère et de polypropylène, copolymère et/ou en mélange de polypropylène et polyéthylène.

Par ailleurs de préférence selon la présente invention, le polypropylène homopolymère représente au moins 80% de la masse totale. C'est-à-dire que le polypropylène copolymère et le polyéthylène, s'ils existent, représentent au maximum 20% de la masse totale des films.

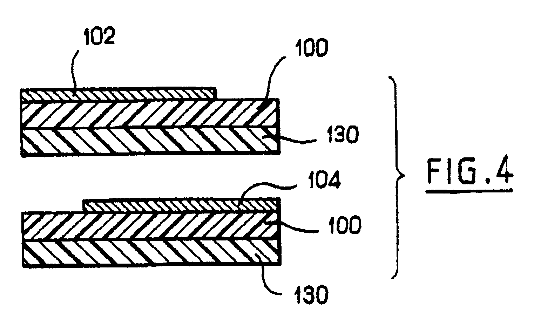

On va maintenant décrire la variante de réalisation illustrée sur la figure 4 annexée.

Selon cette variante de réalisation, les deux feuilles plastiques 100, 130, respectivement de type très cristallin et de type plus amorphe, constituent deux couches superposées d'un film unique.

On aperçoit sur la figure 4 un condensateur formé par empilement de différents films ou enroulement de deux films identiques. Chaque film illustré sur la figure 4 comprend deux couches 100, 130 solidaires entre elles ; la couche 100 est métallisée en 102, respectivement 104, sur sa surface externe.

La feuille 100 métallisée de type très cristallin illustrée sur la figure 4 correspond au film 100 des figures 2 et 3 précédemment décrit.

Cette couche 100 peu soluble réagit peu avec le liquide d'imprégnation.

La feuille 130 non métallisée de type plus amorphe illustrée sur la figure 4 correspond au film 130 des figures 2 et 3 précédemment décrit.

Cette couche 130 soluble réagit avec l'imprégnant, gonfle et se dissout partiellement afin de donner un complexe diélectrique de bonne qualité.

La rugosité des deux faces de chaque couche peut être adaptée en fonction de chaque cas particulier, de façon symétrique ou dissymétrique.

Les couches 100, 130 peuvent avoir les mêmes compositions que décrit précédemment. Les couches 100, 130 peuvent être formées de polypropylène homopolymère ou copolymère ou d'un mélange de polypropylène et de polyéthylène.

De préférence, l'épaisseur de la couche 100 peu soluble dans le liquide d'imprégnation est de l'ordre de 60% de l'épaisseur totale du film.

Les métallisations 102, 104 peuvent être réalisées comme décrit précédemment en regard des figures 2 et 3. Par ailleurs, ces métallisations peuvent faire l'objet d'imperméabilisation comme décrit précédemment.

## Revendications

1. Condensateur électrique imprégné formé par empilement ou enroulement de différents films métallisés caractérisé par le fait qu'il comprend une alternance :

   – de feuilles plastiques métallisées de type très cristallin (100) et
   – de feuilles plastiques non métallisées de type plus amorphe (130).

2. Condensateur électrique imprégné selon la revendication 1, caractérisé par le fait que la feuille plastique métallisée de type très cristallin (100) est en polypropylène.

3. Condensateur électrique imprégné selon l'une des revendications 1 ou 2, caractérisé par le fait que la feuille plastique métallisée de type très cristallin (100) est réalisée dans au moins un matériau choisi dans le groupe comprenant : le polypropylène homopolymère ou copolymère, un mélange de polypropylène homopolymère et polypropylène copolymère, et/ou un mélange de polypropylène et de polyéthylène.

4. Condensateur électrique imprégné selon l'une des revendications 1 ou 3, caractérisé par le fait que la feuille plastique non métallisée de type plus amorphe (130) est en polypropylène.

5. Condensateur électrique imprégné selon l'une des revendictaions 1 ou 4, caractérisé par le fait que la feuille plastique non métallisée de type plus amorphe est réalisée dans au moins un matériau choisi dans le groupe comprenant : le polypropylène homopolymère ou copolymère, un mélange de polypropylène homopolymère et polypropylène copolymère, et/ou un mélange de polypropylène et de polyéthylène.

6. Condensateur électrique imprégné selon l'une des revendications 3 ou 5, caractérisé par le fait que le polypropylène homopolymère représente au moins 80% de la masse totale de la feuille.

7. Condensateur électrique imprégné selon l'une des revendications 1 à 4, caractérisé par le fait qu'il est prévu une couche d'imperméabilisation à base de matériau isolant ou semi-conducteur sur une face au moins de la feuille plastique métallisée de type très cristallin (100).

8. Condensateur électrique imprégné selon l'une des revendications 1 à 7, caractérisé par le fait que la feuille plastique métallisée de type très cristallin (100) est lisse.

9. Condensateur électrique imprégné selon l'une des revendications 1 à 7, caractérisé par le fait que la feuille plastique métallisée de type très cristallin (100) est rugueuse.

10. Condensateur électrique imprégné selon l'une des revendications 1 à 9, caractérisé par le fait que la feuille plastique non métallisée de type plus amorphe (130) est lisse.

11. Condensateur électrique imprégné selon l'une des revendications 1 à 9, caractérisé par le fait que la feuille plastique non métallisée de type plus amorphe (130) est rugueuse.

12. Condensateur électrique imprégné selon l'une des revendications 1 à 11, caractérisé par le fait que les bords (105, 106) des revêtements métallisés (102, 104) prévus sur la feuille plastique de type très cristallin (100) sont épaissis.

13. Condensateur électrique selon l'une des revendications 1 à 12, caractérisé par le fait que les deux feuilles plastiques (100, 300) respectivement de type très cristallin et de type amorphe, sont formées de films séparés.

14. Condensateur électrique selon l'une des revendications 1 à 13, caractérisé par le fait que la feuille plastique métallisée de type très cristallin (100) est un film métallisé bi-face.

15. Condensateur électrique imprégné selon l'une des revendications 1 à 14, caractérisé par le fait que l'épaisseur de la feuille non métallisée (130) est supérieure à l'épaisseur de la feuille métallisée (100).

16. Condensateur électrique imprégné selon l'une des revendications 1 à 15, caractérisé par le fait que la permittivité $\varepsilon_1$ de la feuille métallisée (100) est supérieure à la permittivité $\varepsilon_2$ de la feuille non métallisée (130).

17. Condensateur électrique imprégné selon l'une des revendications 1 à 6, caractérisé par le fait que l'épaisseur des feuilles (100, 130) et leur permittivité sont telles que $\varepsilon_1(E_1)^2 > \varepsilon_2(E_2)^2$ relation dans laquelle :
$\varepsilon_1$ = permittivité de la feuille de type cristallin (100)
$E_1$ = champ dans la même feuille (100)
$\varepsilon_2$ = permittivité de la feuille plus amorphe (130)
$E_2$ = champ dans la même feuille (130).

18. Condensateur électrique selon l'une des revendications 1 à 12, caractérisé par le fait que les deux feuilles plastiques respectivement de type très cristallin (100) et de type plus amorphe (130) constituent deux couches superposées d'un film unique.

19. Condensateur électrique imprégné selon l'une des revendications 1 à 18, caractérisé par le fait que le liquide d'imprégnation est un liquide à caractère aromatique.

20. Condensateur électrique imprégné selon l'une des revendications 1 à 19, caractérisé par le fait que le condensateur après avoir été imprégné par un liquide aromatique, est vidangé puis rempli à l'aide d'un seconde liquide inerte.

21. Condensateur électrique imprégné selon l'une des revendications 1 à 20, caractérisé par le fait que le condensateur après avoir été imprégné par un liquide aromatique, est vidangé puis rempli à l'aide d'un mélange de liquide inerte et aromatique.

22. Condensateur électrique imprégné selon l'une des revendications 1 à 21, caractérisé par le fait que la feuille plastique métallisée de type très cristallin (100) présente une solubilité à 1% dans le M-DBT, tandis que la feuille plastique non métallisée de type plus amorphe (130) présente une solubilité comprise entre 1 et 5% dans le M-DBT.

23. Condensateur électrique imprégné selon l'une des revendications 19 à 21, caractérisé par le fait que le liquide aromatique comprend au moins un composé choisi dans le groupe comprenant :
   – M-DBT : Mono et dibenzyl toluène
   – DOP : Dioctylphtalate
   – DINP : Di-isononylphtalate
   – PXE : Phényl xylyl éthane.
   – DTE : Ditolyléther
   – Isopropylnaphtalate.

24. Condensateur électrique imprégné selon l'une des revendications 20 ou 21, caractérisé par le fait que le liquide inerte est formé d'au moins une huile choisie dans le groupe comprenant :
   – colza
   – tournesol
   – maïs
   – coton
   – silicone.

EP 0 442 799 A1

FIG.1 : Etat de la Technique

FIG.2

FIG.3

FIG.4

Office européen
des brevets

**RAPPORT DE RECHERCHE EUROPEENNE**

Numéro de la demande

EP 91 40 0344

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2536204 (LCC-CICE COMPAGNIE EUROPEENNE DE COMPOSANTS ELECTRONIQUES) <br> * le document en entier * <br> --- | 1, 4, 8, 10, 14 | H01G4/20 <br> H01G4/22 |
| A | EP-A-11796 (HOECHST AG) <br> * pages 1 - 5 * <br> --- | 1, 2, 4, 18 | |
| A | US-A-3483452 (THIGPEN) <br> * colonne 1, ligne 68 - colonne 2, ligne 50 * <br> --- | 1, 2 | |
| D,A | FR-A-2579366 (LCC-CICE COMPAGNIE EUROPEENNE DE COMPOSANTS ELECTRONIQUES) <br> * revendication 1; figure 1 * <br> --- | 1, 12 | |
| A | ELEKTROTECHNISCHE ZEITSCHRIFT - ETZ. vol. 104, no. 10, mai 1983, BERLIN DE pages 480 - 483; KRON: "Tränkmittel für moderne Kondensatorendielektrika" <br> * page 481 * <br> --- | 1, 19, 23 | |
| A | US-A-1989046 (ROBINSON) <br> * revendications * <br> ----- | 1, 20 | **DOMAINES TECHNIQUES RECHERCHES (Int. Cl.5)** <br><br> H01G |

Le présent rapport a été établi pour toutes les revendications

| Lieu de la recherche | Date d'achèvement de la recherche | Examinateur |
|---|---|---|
| LA HAYE | 06 MAI 1991 | MES L.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)